# EUROPÄISCHE PATENTSCHRIFT

(11) **EP 1 507 702 B1**
(45) Veröffentlichungstag und Bekanntmachung des Hinweises auf die Patenterteilung: **02.11.2005**
(21) Anmeldenummer: 03720261.1
(22) Anmeldetag: 04.04.2003
(51) Int. Cl.: B63H 11/08

(54) **SCHNELLES SEEGEHENDES SCHIFF MIT EINEM DOPPELBODEN UND EINEM WASSERSTRAHL-(WATERJET) ANTRIEB**
HIGH-SPEED SEA-GOING SHIP COMPRISING A DOUBLE HULL AND A WATERJET DRIVE
NAVIRE DE HAUTE MER A GRANDE VITESSE POURVU D'UN FOND DOUBLE ET D'UN ENTRAINEMENT DE TYPE HYDROJET

(30) Priorität: 29.05.2002 DE 10224013
(43) Veröffentlichungstag der Anmeldung: 23.02.2005
(73) Patentinhaber: SIEMENS AKTIENGESELLSCHAFT, 80333 München (DE)
(72) Erfinder: SCHULZE, Matthias, 21335 Lüneburg (DE); RZADKI, Wolfgang, 21509 Glinde (DE); WACKER, Bernd, 91074 Herzogenaurach (DE); SADLER, Karl-Otto, 22159 Hamburg (DE)
(86) Internationale Anmeldenummer: PCT/DE2003/001120
(87) Internationale Veröffentlichungsnummer: WO 2003/101829

(56) Entgegenhaltungen:
- DE-A- 3 234 370
- US-A- 3 209 717
- US-A- 4 274 357
- US-A- 5 045 002
- US-A- 5 265 549
- US-A1- 2001 039 155

## Beschreibung

Die Erfindung betrifft ein schnelles seegehendes Schiff mit einem Doppelboden, das einen Wasserstrahl (Waterjet-Antrieb) aufweist, der aus zumindest einem Pumpenaggregat für die Erzeugung des Wasserstrahls und zumindest einem Antriebsmotor für das Pumpenaggregat besteht. Ein solches Schiff ist im Dokument DE 3 234 370 beschrieben.

Es ist Aufgabe der Erfindung, ein schnelles seegehendes Schiff, z.B. eine Fregatte oder einen Zerstörer, aber auch ein Kreuzfahrtschiff oder eine Megayacht, mit einem Antriebssystem zu versehen, das gegenüber den bekannten Antriebssystemen erhebliche Vorteile bietet. Der Hauptvorteil soll das Vermeiden der Abgasfahne sein. Weiterhin soll der Raumbedarf des Antriebs verringert werden. In Verbindung mit einem Propellerantrieb soll außerdem eine Redundanz erreicht werden, die es z.B. Kriegsschiffen erlaubt, auch nach einem schweren Treffer weiterzulaufen.

Die Aufgaben werden dadurch gelöst, dass das Pumpenaggregat und sein Antriebsmotor außerhalb des Heckbereichs des Schiffes unter teilweiser Nutzung des Raums im Doppelboden angeordnet sind.

Durch die erfindungsgemäße neue Anordnung ist es vorteilhaft möglich, Antriebsabgase ohne großen Aufwand unter das Schiff zu leiten, so dass diese sich im Wasser verteilen. Durch Nutzung eines Teils des Doppelbodens wird dabei eine niedrige Einbauhöhe für den Waterjet und seinen Antriebsmotor bei Erreichen eines günstigen Wasserstrahl-Austrittswinkels erreicht.

Waterjets für den Antrieb schneller seegehender Schiffe sind aus den neuesten Internet-Seiten der Firma Rolls-Royce unter dem Titel "Rolls-Royce-the force in marine solutions", Seite 7, bekannt.

Hier befinden sich die einzelnen Komponenten des gebildeten Antriebssystems, wie auch von Speedbooten mit Waterjets bekannt und im Großschiffbau für Propellerantriebe seit altersher üblich, im Heckbereich des Schiffes. Die Waterjets sind dabei aus Gründen der Effektivität im wesentlichen frei ausstrahlend, d.h. über Wasser angeordnet. Eine derartige Anordnung ist jedoch nicht geeignet, die Aufgaben gemäß der Erfindung zu lösen.

In Ausgestaltung der Erfindung ist vorgesehen, dass das Pumpenaggregat und sein Antriebsmotor im hinteren Bereich des Mittelschiffs angeordnet sind. Die Anordnung im hinteren Bereich des Mittelschiffs bedeutet, dass die Wasserstrahlen zur Verteilung des Abgases im Wasser beitragen zu können. Von besonderem Vorteil ist, dass bei schneller Fahrt des Schiffes eine Zerkleinerung und feine Verteilung von Abgasblasen erfolgt. Diese steigen wegen der tiefen Einführung in das Wasser auch erst weit hinter dem Heck des Schiffes zur Wasseroberfläche hoch. Hier gehen sie in der Heckströmung auf.

In weiterer Ausgestaltung der Erfindung ist vorgesehen, dass der Antriebsmotor für das Pumpenaggregat ein Elektromotor ist, wobei dieser Elektromotor insbesondere teilweise HTSL-Wicklungen aufweist. Üblicherweise werden die Pumpenaggregate von Waterjets direkt von Dieselmotoren oder Gasturbinen angetrieben. Dies wäre im Mittelschiffsbereich jedes großen Schiffes möglich. Von besonderem Vorteil für die Regelbarkeit und die Unterbringungsmöglichkeit des Waterjets ist es aber, wenn als Antrieb ein Elektromotor gewählt wird.

In weiterer, wesentlicher Ausgestaltung der Erfindung ist vorgesehen, dass der Antriebsmotor für das Pumpenaggregat einen Läufer mit HTSL-Wicklungen aufweist. Ein Läufer des Elektromotors mit HTSL-Wicklungen erlaubt eine besonders kleine Bauweise. Dabei ist ein großer Luftspalt zwischen Läufer und Ständerwicklungen möglich. Dies begünstigt eine schockfeste Ausbildung des Motors, die für Kriegsschiffe sehr vorteilhaft ist. Darüber hinaus ist der Wirkungsgrad des Motors gegenüber herkömmlichen Elektromotoren erhöht und es ergibt sich weiterhin die sehr vorteilhafte Möglichkeit, den Elektromotor im Doppelboden des Schiffes anzuordnen. Dies wiederum führt zu einer kurzen Welle zwischen dem Elektromotor und dem Pumpenaggregat, das im wesentlichen außerhalb des Doppelbodens des Schiffes angeordnet ist. Insgesamt ergibt sich eine Einheit Waterjet und Antrieb, die gegenüber den herkömmlichen Ausführungen um ein Mehrfaches kleiner und leichter ist. Die technischen Schwierigkeiten, die sich durch eine lange Welle ergeben würden, werden ebenso vermieden wie der große Platzbedarf, z.B. eines Dieseldirektantriebs des Waterjets.

Dabei ist vorgesehen, dass das Pumpenaggregat in einer ein- oder mehrteiligen Gondel angeordnet ist, die insbesondere teilweise in den Doppelboden integriert ist. So ergibt sich die Möglichkeit einer besonders guten Umströmung der Gondel und Einströmung des Wassers in das Pumpenaggregat. Die Einströmung ist insbesondere bei der Verwendung einer Axialpumpe oder einer Diagonal/Radial-Pumpe wesentlich. Die Unterwassersilhouette des Schiffs wird vorteilhaft dabei nur geringfügig verändert.

Der Waterjet, seine Gondel und ggf. sein Antriebsmotor werden vorteilhaft in einer speziellen Bodensektion des Schiffes angeordnet, die als Doppelbodenmodul ausgebildet ist und während der Bauphase des Schiffes in den Doppelboden einfügbar ist. So kann eine rationelle Vorfertigung erfolgen und Schwierigkeiten und Kosten einer nachträglichen Montage werden vermieden. Diese Vorteile ergeben sich auch, wenn die Waterjets bei Handels- oder Passagierschiffen, bei denen die vollständige Abgasverteilung im Wasser nicht so bedeutsam ist, im Heckbereich angeordnet werden.

In einer weiteren Ausgestaltung der Erfindung ist vorgesehen, dass das Pumpenaggregat unter einem hochgezogenen Teil des Schiffs-Unterbodens angeordnet ist. Dabei ist vorteilhaft, dass wegen der kleinen Abmessungen des Elektromotors und seiner Unterbringung im Doppelboden in dem hochgezogenen Teil nur ein Einziehen des Unterbodens erforderlich ist. Ein Sprung in der Unterbodenform ist nicht notwendig.

Pumpenaggregate zur Erzeugung der Wasserstrahlen, d.h. die Waterjets, sind vorzugsweise mehrfach vorhanden und dabei jeweils zu Paaren gebündelt. So ergibt sich eine besonders strömungsgünstige Ausbildung der kleinen Waterjetgehäuse, die vollständig unter dem Unterboden angeordnet sein können oder teilweise in den Unterboden einbezogen sind. Dies kommt auf die jeweilige Schiffsgröße und die projektierte Geschwindigkeit an, von denen die Größe der Waterjets abhängt.

Die Waterjets sind vorteilhaft sowohl horizontal als auch unter Umständen vertikal gegenüber der Schiffslängsachse bzw. der Horizontalebene geneigt. Die Neigung beträgt vorteilhaft etwa 4 bis 7 Grad, ist also sehr gering. So ergeben sich besonders günstige Strömungsverhältnisse unter dem Rumpf, die es erlauben, die Waterjets und erfindungsgemäß auch vorgesehene elektrische Ruderpropeller am Heck mit gutem Wirkungsgrad zu betreiben. Das Schiff ist dabei sowohl nur mit den Ruderpropellern als auch nur mit den Waterjets und vorzugsweise mit einer Kombination aus diesen beiden Antriebskomponenten fahrttüchtig.

Dies insbesondere, wenn die Waterjets leicht auswärts gestellt werden. Die Pumpenaggregate folgen in ihrer Anordnung vorteilhaft teilweise der Aufkimmung des Schiffsbodens. So kann die Verteilung von Abgasen besonders günstig erfolgen.

Zur vorteilhaften Einführung der Abgase in das Wasser ist dabei vorgesehen, dass jedes Pumpenaggregat an einer Wasseraustrittsseite ein koaxiales Abgasdüsensegment (KADS) für die Zumischung von Schiffsabgasen zu dem Wasserstrahl aufweist. So ist die Einführung der Schiffsabgase in die Bodenströmung des Schiffes möglich, ohne dass Abgasverdichter eingesetzt werden müssen. Gleichzeitig ist vorteilhaft eine gute Verteilung der Abgase im Wasser sichergestellt.

Der Antriebsmotor des Pumpenaggregats bezieht seine Elektro-energie vorteilhaft von einem Gasturbinengeneratorsatz, der insbesondere in einem Energieerzeugungsmodul untergebracht ist. Dieses Energieerzeugungsmodul kann in vorteilhafter Weise gut schockgesichert aufgestellt werden, so dass sich zusammen mit einer einzel-schocksicheren Aufstellung der Aggregate im Energieerzeugungsmodul für Kriegsschiffe eine hohe Schocksicherheit des gesamten Antriebs ergibt. Auch der Wasserstrahlantrieb kann in sich sehr schocksicher ausgebildet werden, da alle Lager schockgesichert ausgebildet werden können und die einzelnen Teile aus hochfesten Materialien bestehen.

Es ist dabei vorteilhaft vorgesehen, dass der Gasturbinengeneratorsatz oberhalb des Pumpenaggregats angeordnet ist. So ergibt sich im achteren Teil der Schiffsmitte, tief unten im Schiff und damit gut geschützt, ein Energieerzeugungssystem für den Schiffsvortrieb, der sehr standfest ausgebildet werden kann. Von weiterem Vorteil ist dabei, dass es möglich ist, die Gasturbinenabgasleitung kurz ausgebildet in das koaxiale Abgasdüsensegment (KADS) auf der Wasserstrahl-Austrittsseite des Pumpenaggregats einmünden zu lassen. So werden die Abgasdruckverluste minimiert. Die Abgasleitung selbst kann in einen Unterdruckbereich des koaxialen Abgasdüsensegments (KADS) eingeführt werden, so dass sich kein erheblicher Leistungsverlust der Gasturbine ergibt.

In weiterer Ausgestaltung der Erfindung ist vorgesehen, dass der Generator HTSL-Wicklungen aufweist, insbesondere einen Läufer mit HTSL-Wicklungen. So kann auch der Generator in bisher unerreichter Weise klein ausgebildet und schockgesichert werden.

Hinter den Waterjets sind Strahlablenkungselemente für die Wasserstrahlen vorgesehen, insbesondere in den Doppelboden einziehbare Strahlablenkungselemente, etwa schwenkbare Platten. So ergibt sich eine Lenkbarkeit der Wasserstrahlen, die in besonderer Weise der räumlichen Anordnung der Waterjets im Schiffskörper angepaßt ist. Gleichzeitig ergibt sich eine strömungsgünstige Ausführung für den Fall, dass die Waterjets nicht angeschaltet sind.

Die Waterjets sind vorteilhaft einzeln regelbar ausgebildet - dies ist durch die Verwendung von elektrischen Antriebsmotoren einfach möglich - und die Leistung der Waterjets wird in Abstimmung mit der Regelung der Leistung eines zusätzlichen Propellerantriebs durchgeführt. So kann jederzeit, auch bei Ausfall des Propellerantrieb, sowohl die Steuerbarkeit des Schiffes - durch die Einzelregelung, die seitenabhängig erfolgen kann - als auch die Regelung der Gesamtgeschwindigkeit des Schiffes durchgeführt werden. Insgesamt ergibt sich eine Überlebensfähigkeit und eine Manövrierfähigkeit des Schiffes, wie sie bisher im Kriegsschiffbau und auch im zivilen Schiffbau nicht bekannt war.

Das erfindungsgemäß ausgebildete Schiff weist vorteilhaft außer den Waterjets noch einen Propellerantrieb, insbesondere einen elektrischen Ruderpropellerantrieb auf, wobei der elektrische Ruderpropellerantrieb seine Elektroenergie vorzugsweise aus Brennstoffzellen bezieht. Dabei ergibt sich sowohl für zivile Schiffe als auch für Kriegsschiffe der Vorteil der völligen Emissionsfreiheit bei Brennstoffzellenbetrieb (niedrige Fahrtstufen) bzw. der unbemerkbaren Emissionen für Motor(Gasturbinen)-Waterjetbetrieb (hohe Fahrtstufen). Die bisher üblichen und leicht detektierbaren (Kriegsschiffe) bzw. lästigen (Zivilschiffe) Abgasfahnen und Geräusche entfallen völlig.

Die Erfindung wird anhand von Zeichnungen näher erläutert, aus denen weitere, auch erfindungswesentliche, Einzelheiten entnehmbar sind.

Es zeigen:
- FIG 1: eine schematische Darstellung des Mittelschiffs-Antriebsbereichs (Bodensektion);
- FIG 2: eine Gittertopologie der Anordnung und der Gehäuseausbildung eines Paars von Waterjets; und
- FIG 3: eine Skizze, aus der die Vertikallage der Waterjets hervorgeht.

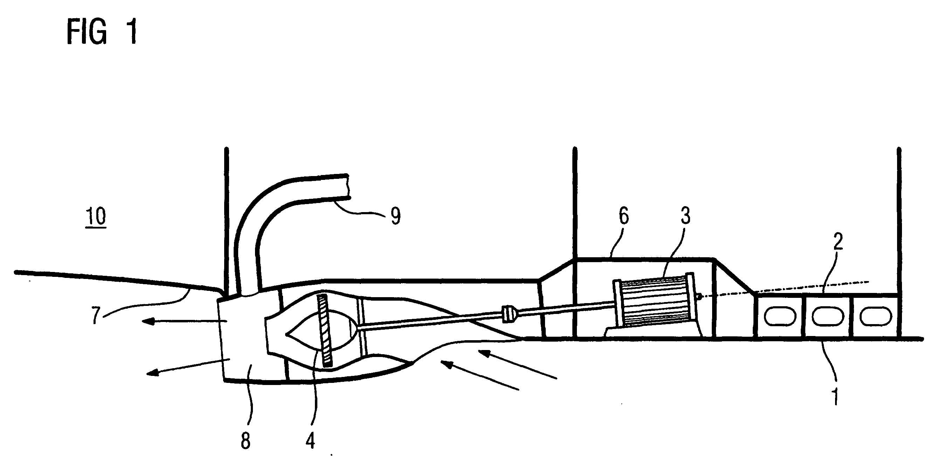

In FIGUR 1 bezeichnet 1 den Schiffs-Unterboden und 2 die Oberseite des Doppelbodens. Im leicht nach oben gezogenen Bereich 6 der Oberseite des Doppelbodens befindet sich der Antriebsmotor 3 für das Wasserstrahlerzeugungsaggregat 4, vorzugsweise ein Motor mit HTSL-Läuferwicklung. Die Welle zwischen den Komponenten 3 und 4 kann vorteilhaft sehr kurz ausgebildet sein. Abhängig von der Wellenlänge ergibt sich die Stärke der Einziehung 7 des Schiffs-Unterbodens. Über der Antriebseinheit des Schiffes ist ein nicht gezeigter Gasturbinen-Generatorsatz in einem Modul angeordnet, in dem sich vorteilhaft auch die Steuer- und Regeleinrichtungen für den Antrieb befinden. An das Wasserpumpenaggregat 4 ist ein koaxiales Abgasdüsensegment (KADS) 8 angefügt, in das die Abgasleitung 9 einmündet. Diese ist in besonderer Weise isoliert und weist eine Verschlußklappe auf.

An das Wasserpumpenaggregat 4 schließt sich im Schiffsrumpf ein Hilfsmaschinenraum 10 an. Der Hilfsmaschinenraum 10, der Bereich des Wasserpumpenaggregats 4 und der Schiffsbodenbereich, in dem sich der Elektromotor 3 befindet, bilden zusammen eine Bodensektion, die vorteilhaft schon beim Bau des Schiffes montiert wird.

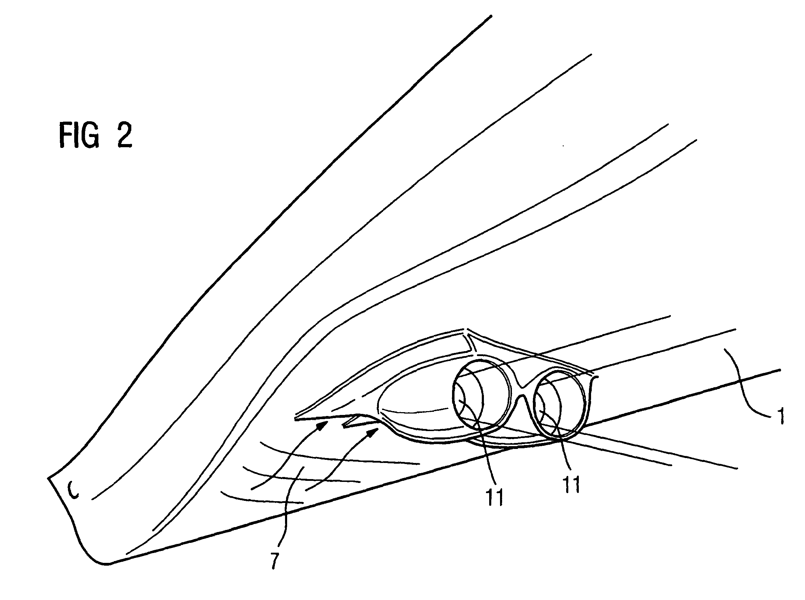

Nähere Einzelheiten einer Möglichkeit der Unterbringung der Waterjets in paarweise angeordneten Gondeln zeigt die Gittertopologie in FIGUR 2 mit den beiden Gondeln 10 und 11. Wie sich aus der Gittertopologie ergibt, ist es möglich, ohne erhebliche Eingriffe in die Geometrie des Schiffsbodens eine gute Einströmung des Wassers in die Waterjets zu erhalten. Diese bilden den Unterwasserquerschnitt des Schiffes nur unwesentlich erhöhende Vorsprünge, so dass die entstehenden Verwirbelungen nur gering sind. Insgesamt ergibt sich erfindungsgemäß eine gute Unterwasserform des Schiffes auch im Bereich der Waterjets.

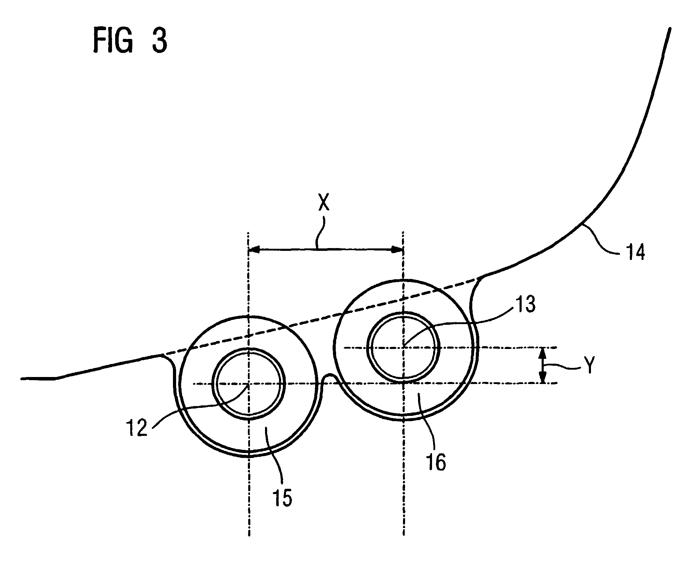

In FIGUR 3 bezeichnet 12 die Mittelachse eines ersten Waterjets 15 und 13 die Mittelachse eines zweiten Waterjets 16, die zusammen ein Paar bilden. Der horizontale Abstand zwischen den Waterjets 15, 16 ist mit X bezeichnet. Y bezeichnet den vertikalen Abstand zwischen den Waterjets 15, 16. Der vertikale Abstand Y orientiert sich an der Aufkimmung der Außenkante 14 im Bereich der Waterjets. Die Größe von X und Y bestimmt in Abhängigkeit von der Außermittigkeit der Waterjetanordnung und der Aufkimmung des Schiffsbodens, wieviel Prozent des Abgases nach hinten abströmt und wieviel Prozent an den Schiffsseiten aufsteigt.

## Patentansprüche

1. Schnelles seegehendes Schiff mit einem Doppelboden, das einen Wasserstrahl antrieb aufweist, der aus zumindest einem Pumpenaggregat für die Erzeugung des Wasserstrahls und zumindest einem Antriebsmotor für das Pumpenaggregat besteht, **dadurch gekennzeichnet, dass** das Pumpenaggregat (4) und sein Antriebsmotor (3) unter teilweiser Nutzung des Raums im Doppelboden (1, 2) außerhalb des Heckbereichs des Schiffes angeordnet sind.

2. Schiff nach Anspruch 1, **dadurch gekennzeichnet, dass** das Pumpenaggregat (4) und sein Antriebsmotor (3) im hinteren Bereich des Mittelschiffs angeordnet sind.

3. Schiff nach Anspruch 1 oder 2, **dadurch gekennzeichnet, dass** der Antriebsmotor (3) für das Pumpenaggregat (4) ein Elektromotor ist, wobei dieser Elektromotor zumindest teilweise, HTSL-Wicklungen aufweist.

4. Schiff nach Anspruch 3, **dadurch gekennzeichnet, dass** der Elektromotor einen Läufer mit HTSL-Wicklungen aufweist.

5. Schiff nach einem der Ansprüche 3 oder 4, **dadurch gekennzeichnet, dass** der Elektromotor im Doppelboden (1, 2) des Schiffes angeordnet ist.

6. Schiff nach einem oder mehreren der vorhergehenden Ansprüche, **dadurch gekennzeichnet, dass** das Pumpenaggregat (4) in einer ein- oder mehrteiligen Gondel (15, 16) angeordnet ist, die insbesondere teilweise in den Doppelboden (1, 2) integriert ist.

7. Schiff nach einem oder mehreren der vorhergehenden Ansprüche, **dadurch gekennzeichnet, dass** das Pumpenaggregat (4) unter einem hochgezogenen Teil (7) des Schiffs-Unterbodens (1) angeordnet ist.

8. Schiff nach einem oder mehreren der vorhergehenden Ansprüche, **dadurch gekennzeichent, dass** der Waterjet, seine Gondel (15, 16) und ggf. sein Antriebsmotor (3) in einer speziellen Bodensektion des Schiffes angeordnet sind.

9. Schiff nach Anspruch 8, **dadurch gekennzeichnet, dass** die Bodensektion als Doppelbodenmodul ausgebildet ist, das während der Bauphase des Schiffes in den Doppelboden (1, 2) einfügbar ist.

10. Schiff nach Anspruch 8, **dadurch gekennzeichnet, dass** die Bodensektion vorzugsweise im Mittelschiffs- oder ggf. auch im Achterschiffsbereich angeordnet ist.

11. Schiff nach einem oder mehreren der vorhergehenden Ansprüche, **dadurch gekennzeichnet, dass** es mehrere, insbesondere zwei oder vier Pumpenaggregate (4) aufweist, die vorzugsweise jeweils paarweise nebeneinander angeordnet sind.

12. Schiff nach einem oder mehreren der vorhergehenden Ansprüche, **dadurch gekennzeichnet, dass** das Pumpenaggregat (4) oder ein Paar gegenüber der Horizontalrichtung geneigt angeordnet ist, insbesondere derart, dass der Wasserstrahl abwärts geneigt ist, z.B. um 1 Grad bis 8 Grad, insbesondere um 4 bis 7 Grad.

13. Schiff nach einem oder mehreren der vorhergehenden Ansprüche, **dadurch gekennzeichnet, dass** das Pumpenaggregat (4) oder ein Paar gegenüber der Schiffslängsrichtung nach außen ausgestellt ist.

14. Schiff nach einem oder mehreren der Ansprüche 11 bis 13, **dadurch gekennzeichnet, dass** jedes Pumpenaggregatepaar (15, 16) bezüglich seiner Vertikallage ganz oder teilweise der Aufkimmung des Schiffsbodens (14) angepaßt ist.

15. Schiff nach einem oder mehreren der vorhergehenden Ansprüche, **dadurch gekennzeichnet, dass** jedes Pumpenaggregat (4) an seiner Wasseraustrittseite ein koaxiales Abgasdüsensegment (KADS) (8) für die Zumischung von Schiffsabgasen zu dem Wasserstrahl aufweist.

16. Schiff nach einem oder mehreren der vorhergehenden Ansprüche, **dadurch gekennzeichnet, dass** der Antriebsmotor (3) des Pumpenaggregats (4) seine Elektro-Energie von einem Gasturbinen-Generatorsatz bezieht, der insbesondere in einem Energieerzeugungsmodul untergebracht ist.

17. Schiff nach einem oder mehreren der vorhergehenden Ansprüche, **dadurch gekennzeichnet, dass** der Gasturbinen-Generatorsatz oberhalb des Motor- und Pumpenaggregatbereichs angeordnet ist.

18. Schiff nach Anspruch 16 oder 17, **dadurch gekennzeichnet, dass** die Gasturbine eine Abgasleitung (9) aufweist, die kurz ausgebildet ist und in das koaxiale Abgasdüsensegment (KADS) (8) einmündet.

19. Schiff nach Anspruch 16 oder 17, **dadurch gekennzeichnet, dass** der Generator HTSL-Wicklungen aufweist, insbesondere einen Läufer mit HTSL-Wicklungen.

20. Schiff nach einem oder mehreren der vorhergehenden Ansprüche, **dadurch gekennzeichnet, dass** es Strahlablenkungselemente für die Waterjets aufweist, insbesondere in den Doppelboden (1, 2) einziehbare Strahlablenkungselemente, etwa schwenkbare Platten.

21. Schiff nach einem oder mehreren der vorhergehenden Ansprüche, **dadurch gekennzeichnet, dass** die Waterjets einzeln regelbar ausgebildet sind.

22. Schiff nach einem oder mehreren der vorhergehenden Ansprüche, **dadurch gekennzeichnet, dass** es außer den Waterjets (15, 16) einen Ruderpropellerantrieb, insbesondere einen elektrischen Ruderpropellerantrieb aufweist, wobei der elektrische Ruderpropellerantrieb seine Elektroenergie vorzugsweise aus Brennstoffzellen bezieht.

23. Schiff nach einem oder mehreren der vorhergehenden Ansprüche, **dadurch gekennzeichnet, dass** die Regelung der Leistung der Waterjets in Abstimmung mit der Regelung der Leistung eines Propellerantriebs des Schiffes, etwa von elektrischen Ruderpropellern, erfolgt.

24. Schiff nach einem oder mehreren der vorhergehenden Ansprüche, **dadurch gekennzeichnet, dass** es ein Marine schiff ist, etwa eine Fregatte, eine Korvette oder ein Schnellboot.

25. Schiff nach einem oder mehreren der Ansprüche 1 bis 23, **dadurch gekennzeichnet, dass** es ein Handels- oder Passagierschiff ist, etwa ein Kreuzfahrtschiff, ein Ropaxschiff oder eine große Yacht.

## Claims

1. Fast sea-going ship with a double bottom featuring a waterjet drive consisting of at least one pump assembly for generating the water jet and at least one drive motor for the pump assembly, **characterised in that** the pump assembly (4) and its drive motor (3) are located outside the stern area of the ship, using some of the space in the double bottom (1, 2).

2. Ship in accordance with claim 1, **characterised in that** the pump assembly (4) and its drive motor (3) are located in the rear midships area.

3. Ship in accordance with claim 1 or 2, **characterised in that** the drive motor (3) for the pump assembly (4) is an electric motor, with this electric motor, at least in part, featuring HTSL windings.

4. Ship in accordance with claim 3, **characterised in that** the electric motor features an armature with HTSL windings.

5. Ship in accordance with one of the claims 3 or 4, **characterised in that** the electric motor is located in the double bottom (1, 2) of the ship.

6. Ship in accordance with one or more of the previous claims, **characterised in that** the pump assembly (4) is located in a single-part or multipart gondola (15, 16) which is especially partly integrated into the double bottom (1, 2).

7. Ship in accordance with one or more of the previous claims, **characterised in that** the pump assembly (4) is located under a raised part (7) of the ship's bottom (1).

8. Ship in accordance with one or more of the previous claims, **characterised in that** the waterjet, its gondola (15, 16) and where necessary its drive motor (3) are arranged in a special bottom section of the ship.

9. Ship in accordance with claim 8, **characterised in that** the bottom section is embodied as a double bottom module which can be inserted into the double bottom (1, 2) when the ship is being built.

10. Ship in accordance with claim 8, **characterised in that** the floor section is preferably located amidships or in the aft section of the ship.

11. Ship in accordance with one or more of the previous claims, **characterised in that** it features a number, especially two or four, pump assemblies (4) which are preferably each arranged in pairs next to one another.

12. Ship in accordance with one or more of the previous claims, **characterised in that** the pump assembly (4) or a pair is arranged inclined at an angle to the horizontal direction, especially such that the water jet is inclined upwards, e.g. by 1 degree to 8 degrees, especially by 4 to 7 degrees.

13. Ship in accordance with one or more of the previous claims, **characterised in that** the pump assembly (4) or a pair is positioned outwards from the longitudinal direction of the ship.

14. Ship in accordance with one or more of the claims 11 to 13, **characterised in that** each pair of pump assemblies (15, 16) as regards its vertical position, is adapted entirely of partly to the slope of the ship's bottom (14).

15. Ship in accordance with one or more of the previous claims, **characterised in that** each pump assembly (4) on its water outlet side features a coaxial exhaust gas nozzle segment (KADS) (8) for mixing the ship's exhaust gases into the water jet.

16. Ship in accordance with one or more of the previous claims, **characterised in that** the drive motor (3) of the pump assembly (4) obtains its electrical energy from a gas turbine generator set which is especially accommodated in the energy generation module.

17. Ship in accordance with one or more of the previous claims, **characterised in that** the gas turbine generator set is located above the motor and pump assembly area.

18. Ship in accordance with claim 16 or 17, **characterised in that** the gas turbine features an exhaust line (9) which is designed to be short and comes out into the coaxial exhaust gas nozzle segment (KADS) (8).

19. Ship in accordance with claim 16 or 17, **characterised in that** the generator features HTSL windings, especially an armature with HTSL windings.

20. Ship in accordance with one or more of the previous claims, **characterised in that** it features jet deflection elements for the waterjets, especially jet deflection plates that can be retracted into the double bottom (1, 2), such as swivelling plates.

21. Ship in accordance with one or more of the previous claims, **characterised in that** the waterjets are embodied so that they can be controlled individually.

22. Ship in accordance with one or more of the previous claims, **characterised in that**, apart from the water jets (15, 16) it features a rudder propeller drive, especially an electrical rudder propeller drive, where the electrical rudder propeller drive preferably obtains its electrical energy from fuel cells.

23. Ship in accordance with one or more of the previous claims, **characterised in that** the control of the power of the water jets is matched to the control of the power of the propeller drive of the ship, such as of electrical rudder propellers.

24. Ship in accordance with one or more of the previous claims, **characterised in that** it is a navy ship, such as a frigate, a corvette or a fast patrol boat.

25. Ship in accordance with one or more of the claims 1 to 23, **characterised in that** it is a cargo ship or a passenger ship, such as a ferry or RoPax ship or a large yacht.

## Revendications

1. Navire de haute mer rapide à double fond, lequel navire comporte un entraînement à jet d'eau qui est constitué d'au moins un groupe de pompage pour produire le jet d'eau et d'au moins un moteur d'entraînement du groupe de pompage, **caractérisé en ce que** le groupe de pompage (4) et son moteur d'entraînement (3) sont placés à l'extérieur de la région arrière du navire en utilisant partiellement l'espace ménagé dans le double fond (1, 2).

2. Navire selon la revendication 1, **caractérisé en ce que** le groupe de pompage (4) et son moteur d'entraînement (3) sont placés dans la région arrière de la partie médiane du navire.

3. Navire selon la revendication 1 ou 2, **caractérisé en ce que** le moteur d'entraînement (3) du groupe de pompage (15) est un moteur électrique, ce moteur électrique comportant au moins partiellement des enroulements HTSL.

4. Navire selon la revendication 3, **caractérisé en ce que** le moteur électrique comporte un rotor doté d'un enroulement HTSL.

5. Navire selon l'une des revendications 3 ou 4, **caractérisé en ce que** le moteur électrique est placé dans le double fond (1, 2) du navire.

6. Navire selon l'une ou plusieurs des revendications précédentes, **caractérisé en ce que** le groupe de pompage (15) est placé dans une nacelle (15, 16), constituée d'une ou plusieurs parties, qui est intégrée en particulier partiellement dans le double fond (1, 2).

7. Navire selon l'une ou plusieurs des revendications précédentes, **caractérisé en ce que** le groupe de pompage (4) est placé sous une partie surélevée (7) de la partie de fond inférieure (1) du navire.

8. Navire selon l'une ou plusieurs des revendications précédentes, **caractérisé en ce que** le jet d'eau, sa nacelle (15, 16) et le cas échéant son moteur d'entraînement (3) sont disposés dans une section de fond spéciale du navire.

9. Navire selon la revendication 8, **caractérisé en ce que** la section de fond est conformée en module de double fond qui peut être inséré dans le double fond (1, 2) pendant la phase de construction du navire.

10. Navire selon la revendication 8, **caractérisé en ce que** la section de fond est placé avantageusement dans la partie médiane du navire ou le cas échéant également dans la région arrière du navire.

11. Navire selon l'une ou plusieurs des revendications précédentes, **caractérisé en ce qu'**il comporte plusieurs, en particulier deux ou quatre, groupes de pompage (4) qui sont disposés avantageusement par paires l'un à côté de l'autre.

12. Navire selon l'une ou plusieurs des revendications précédentes, **caractérisé en ce que** le groupe de pompage (4) ou une paire de groupes de pompage est disposé en étant incliné par rapport à la direction horizontale, en particulier de telle sorte que le jet d'eau est incliné vers le bas, c'est-à-dire par exemple de 1° à 8°, en particulier de 4° à 7°.

13. Navire selon l'une ou plusieurs des revendications précédentes, **caractérisé en ce que** le groupe de pompage (4) ou une paire de groupes de pompage est exposé vers l'extérieur par rapport à la direction longitudinale du navire.

14. Navire selon l'une ou plusieurs des revendications 11 à 13, **caractérisé en ce que** chaque paire de groupes de pompage (15, 16) est adaptée, quant à sa position verticale, en tout ou partie à l'acculement du fond (14) du navire.

15. Navire selon l'une ou plusieurs des revendications précédentes, **caractérisé en ce que** chaque groupe de pompage (4) comporte sur son côté de sortie d'eau un segment coaxial de buses pour gaz d'échappement (KADS) destiné au mélange de gaz d'échappement du navire au jet d'eau.

16. Navire selon l'une ou plusieurs des revendications précédentes, **caractérisé en ce que** le moteur d'entraînement (3) du groupe de pompage (4) obtient son énergie électrique d'un ensemble groupe générateur/turbine à gaz, qui est monté en particulier dans un module de production d'électricité.

17. Navire selon l'une ou plusieurs des revendications précédentes, **caractérisé en ce que** l'ensemble groupe générateur/turbine à gaz est disposé au-dessus de la région du moteur et du groupe de pompage.

18. Navire selon la revendications 16 ou 17, **caractérisé en ce que** la turbine à gaz comporte une conduite de gaz d'échappement (20) qui est conformée pour être courte et qui débouche dans le segment coaxial de buse de gaz d'échappement (KADS).

19. Navire selon la revendication 16 ou 17, **caractérisé en ce que** le générateur comporte des enroulements HTSL, en particulier un rotor doté d'enroulements HTSL.

20. Navire selon l'une ou plusieurs des revendications précédentes, **caractérisé en ce qu'**il comporte des éléments de déviation des jets d'eau, en particulier des éléments de déviation de jets, par exemple des plaques basculantes, pouvant être insérés dans le double fond (1, 2).

21. Navire selon l'une ou plusieurs des revendications précédentes, **caractérisé en ce que** les jets d'eau sont conformés pour être réglables individuellement.

22. Navire selon l'une ou plusieurs des revendications précédentes, **caractérisé en ce qu'**il comporte en plus des jets d'eau (15, 16) un entraînement d'hélices de gouvernail, en particulier un entraînement d'hélices de gouvernail électrique, l'entraînement d'hélices de gouvernail électrique obtenant son énergie électrique avantageusement de piles à combustible.

23. Navire selon l'une ou plusieurs des revendications précédentes, **caractérisé en ce que** la régulation de la puissance des jets d'eau est effectuée en ajustant la régulation de la puissance d'un entraînement d'hélice de gouvernail du navire, par exemple d'hélices de gouvernail électriques.

24. Navire selon l'une ou plusieurs des revendications précédentes, **caractérisé en ce qu'**il est un navire de haute mer, par exemple une frégate, une corvette ou une vedette.

25. Navire selon l'une ou plusieurs des revendications 1 à 23, **caractérisé en ce que** c'est un navire de commerce ou de transport de passagers, par exemple un navire de croisière, un navire Ropax ou un grand yacht.
